# EUROPEAN PATENT APPLICATION

(11) **EP 4 383 195 A1**
(43) Date of publication of application: **12.06.2024**
(21) Application number: 23200348.3
(22) Date of filing: 28.09.2023
(51) Int. Cl.: G06T 7/292, G06T 7/246

(54) **IMAGE PROCESSING APPARATUS, IMAGE PROCESSING SYSTEM, IMAGE PROCESSING METHOD, AND CARRIER MEDIUM**

(30) Priority: 03.10.2022 JP 2022159283; 07.07.2023 JP 2023112494
(71) Applicant: Ricoh Company, Ltd., Tokyo 143-8555 (JP)
(72) Inventor: OYAMA, Mei, Tokyo, 143-8555 (JP)
(74) Representative: SSM Sandmair

(57) **Abstract**

An image processing apparatus (5) communicates with an image capturing apparatus (3). The image processing apparatus (5) includes an acquisition unit (11) to acquire an image of an imaging range of the image capturing apparatus (3), captured by the image capturing apparatus (3), a recognition unit (12) to recognize an identification that identifies an individual target object included in the image, a trajectory calculation unit (17) to calculate a trajectory of positions between which the target object included in the image moves, an estimation unit (14) to estimate an area in which the target object is present based on the trajectory, and an individual object estimation information calculation unit (15) to acquire the trajectory based on the positions at which the identification of the target object is recognized and obtain individual area estimation information associating the estimated area corresponding to the acquired trajectory and the identification of the target object.

## Description

### BACKGROUND

### Technical Field

Embodiments of the present disclosure relate to an image processing apparatus, an image processing system, an image processing method, and a carrier medium.

### Related Art

In the related art, there is a technique for tracking a moving object such as a person, an object, and a machine using cameras in workplaces or facilities. For example, Japanese Unexamined Patent Application Publication No. 2020-098590 discloses a technique of recognizing a unique identification presented on a moving object that moves in a target range using one or more cameras, and tracking the moving object based on images obtained by one or more cameras capturing the moving object on which the recognized identification is presented.

However, the technique in the related art is implemented on the assumption that the moving object is captured by one or more cameras to be tracked. Therefore, in the technique in the related art, when the moving object is hidden by a shield or an obstacle, the identification presented on the moving object cannot be recognized, and the moving object cannot be tracked.

### SUMMARY

In one aspect, an image processing apparatus communicates with an image capturing apparatus. The image processing apparatus includes an acquisition unit to acquire an image of an imaging range of the image capturing apparatus, captured by the image capturing apparatus, a recognition unit to recognize an identification that identifies an individual target object included in the image, a trajectory calculation unit to calculate a trajectory of positions between which the target object included in the image moves, an estimation unit to estimate an area in which the target object is present based on the trajectory, and an individual object estimation information calculation unit to acquire the trajectory based on the positions at which the identification of the target object is recognized and obtain individual area estimation information associating the estimated area corresponding to the acquired trajectory and the identification of the target object.

In another aspect, an image processing system includes an image capturing apparatus and an image processing apparatus communicable with the image capturing apparatus. The image processing apparatus includes an acquisition unit to acquire an image of an imaging range of the image capturing apparatus, captured by the image capturing apparatus, a recognition unit to recognize an identification that identifies an individual target object included in the image, a trajectory calculation unit to calculate a trajectory of positions between which the target object included in the image moves, an estimation unit to estimate an area in which the target object is present based on the trajectory, and an individual object estimation information calculation unit to acquire the trajectory based on the positions at which the identification of the target object is recognized and obtain individual area estimation information associating the estimated area corresponding to the acquired trajectory and the identification of the target object.

In another aspect, an image processing method is executed by an image processing apparatus communicable with an image capturing apparatus. The method includes acquiring an image of an imaging range of the image capturing apparatus, captured by the image capturing apparatus, recognizing an identification that identifies an individual target object included in the image, calculating a trajectory of positions between which the target object included in the image moves, estimating an area in which the target object is present based on the trajectory, and obtaining individual area estimation information associating the estimated area corresponding to acquired trajectory and the identification of the target object, the acquired trajectory having been acquired based on the positions at which the identification of the target object is recognized.

In another aspect, a carrier medium carrying computer readable code for controlling a computer system carries out a method. The method includes acquiring an image of an imaging range of the image capturing apparatus, captured by the image capturing apparatus, recognizing an identification that identifies an individual target object included in the image, calculating a trajectory of positions between which the target object included in the image moves, estimating an area in which the target object is present based on the trajectory, and obtaining individual area estimation information associating the estimated area corresponding to acquired trajectory and the identification of the target object, the acquired trajectory having been acquired based on the positions at which the identification of the target object is recognized.

In view of the foregoing, an object of the present disclosure is to track a moving object even when an identification presented on the moving object cannot be recognized.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a schematic diagram illustrating an image processing system according to one embodiment of the present disclosure;
FIG. 2 is a block diagram illustrating a hardware configuration of an image processing apparatus and a communication terminal according to one embodiment of the present disclosure;
FIG. 3 is a block diagram illustrating a functional configuration of an image processing system according to one embodiment of the present disclosure;
FIG. 4 is a flowchart of the processing to track a target object according to one embodiment of the present disclosure;
FIG. 5 is a diagram illustrating a data structure of identification (ID) recognition information according to one embodiment of the present disclosure;
FIG. 6 is a diagram illustrating a data structure of object tracking information according to one embodiment of the present disclosure;
FIG. 7 is a diagram illustrating a data structure of tracking number information according to one embodiment of the present disclosure;
FIG. 8 is a diagram illustrating a data structure of camera information according to one embodiment of the present disclosure;
FIG. 9A is a diagram illustrating a data structure of area information according to one embodiment of the present disclosure; FIGS. 9B to 9D are diagrams each illustrating a heat map of an in-image position according to one embodiment of the present disclosure;
FIGS. 10A and 10B are diagrams each illustrating areas and imaging ranges of cameras according to one embodiment of the present disclosure;
FIGS. 11A and 11B are diagrams each illustrating an area estimation method according to one embodiment of the present disclosure;
FIG. 12 is a diagram illustrating a data structure of area estimation information according to one embodiment of the present disclosure;
FIGS. 13A and 13B are diagrams each illustrating a method for associating an identification (ID) label and a target object with each other according to one embodiment of the present disclosure;
FIG. 14 is a diagram illustrating a data structure of individual object area estimation information according to one embodiment of the present disclosure;
FIG. 15 is a diagram illustrating a display screen displayed on a communication terminal according to one embodiment of the present disclosure;
FIGS. 16A and 16B are diagrams each illustrating the processing of identification recognition according to one embodiment of the present disclosure; and
FIG. 17 is a flowchart of the processing of identification recognition according to one embodiment of the present disclosure.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

An image processing apparatus, an image processing system, an image processing method, and a carrier medium according to embodiments of the present disclosure are described in detail below with reference to the drawings.

### First Embodiment

### System Overview

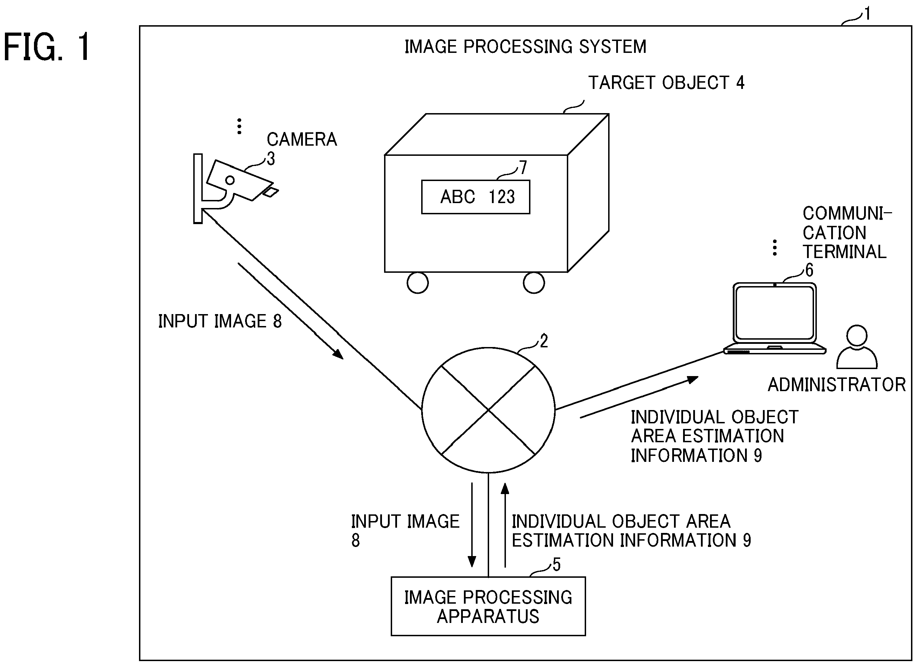

FIG. 1 is a schematic diagram illustrating an image processing system 1 according to an embodiment of the present disclosure. The image processing system 1 includes at least one camera 3 connected to a communication network 2 such as the Internet or a local network, an image processing apparatus 5, and at least one communication terminal 6. The camera may be also referred to as an image capturing apparatus.

The camera 3 captures an image of a target object 4 that moves in an imaging range of the camera 3, and transmits the captured image as an input image 8 to the image processing apparatus 5 via the communication network 2. The target object 4 is, for example, a container called a unit load device (ULD) used in the air cargo transportation business. An identification (ID) label 7 that identifies an individual object is attached onto the target object 4. In the ID label 7, for example, a character string formed of alphanumeric characters unique to each object is described in order to identify the individual object. The character string is referred to as an identification (ID), which is also referred to as identification code or identifier.

The image processing apparatus 5 uses the input image 8 received from the camera 3 to output individual object area estimation information 9 including information on an area where an individual target object 4 is estimated to be present, and transmits the individual object area estimation information 9 to the communication terminal 6. Even when the image of the ID label 7 attached onto the target object 4 is not captured for sufficiently recognizing the ID described on the ID label 7 in the input image 8, and therefore the ID described on the ID label 7 cannot be recognized, the image processing apparatus 5 individually detects and tracks the position and the moving direction of the target object 4. When the ID is recognized, the image processing apparatus 5 associates the object tracking information on the tracking result of the target object 4 and the identification (ID) recognition information on the recognition result of the ID with each other to output the individual object area estimation information 9. The individual object area estimation information 9 includes, for an individual ID corresponding to the target object 4, a name of an area where the target object 4 is estimated to be present. The image processing apparatus 5 transmits, via the communication network 2, the individual object area estimation information 9 to the communication terminal 6 such as a personal computer (PC) operated by an administrator.

The communication terminal 6 uses the individual object area estimation information 9 received from the image processing apparatus 5 to display the display screen on which, for example, the ID of the target object 4 and the area where the target object 4 is estimated to be present are presented. The administrator checks the current position of the container that is the target object 4 using the information displayed on the display screen to manage the container. For example, it is assumed that the administrator inputs a process schedule to the communication terminal 6. By comparing the current position of the container with the position planned in the process schedule, the progress of the process can be automatically determined or an alarm can sound when the container is located at a position different from the position planned in the process schedule.

With the configuration described above, the image processing system 1 can track the moving object and specify the position of the moving object even when the ID of the moving object is not continuously captured by the camera. The configuration of the image processing system 1 illustrated in FIG. 1 is given by way of example. For example, the number of cameras 3 and the number of communication terminals 6 may be any number. The camera 3 may be connected to the image processing apparatus 5 via, for example, a universal serial bus (USB) cable, and the input image 8 may be transmitted and received via the USB cable. The communication network 2 may include, for example, a section connected by mobile communication or wireless communication such as a wireless local area network (LAN). The communication terminal 6 may be, for example, a smartphone or a tablet terminal other than the PC. In the communication terminal 6, an application for displaying the display screen based on the individual object area estimation information 9 received from the image processing apparatus 5 may be installed in advance. Alternatively, the image processing apparatus 5 may transmit, to the communication terminal 6, screen information for the communication terminal 6 to display the display screen based on the individual object area estimation information 9. In the present embodiment, the screen information may be information that is described in, for example, a hypertext markup language (HTML) and can be displayed using a web browser.

### Hardware Configuration

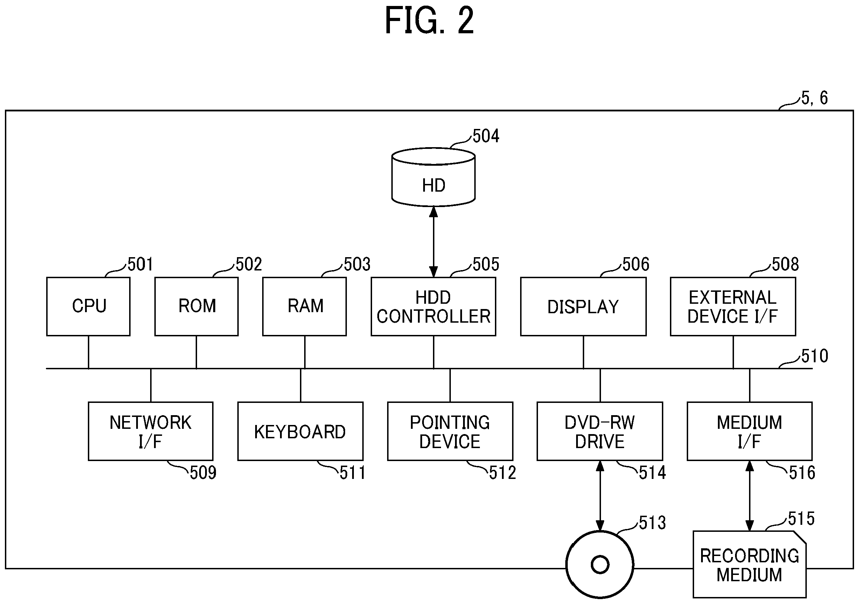

FIG. 2 is a block diagram illustrating a hardware configuration of the image processing apparatus 5 and the communication terminal 6 according to the present embodiment. As illustrated in FIG. 2, each of the image processing apparatus 5 and the communication terminal 6 is implemented by a computer. The computer includes a central processing unit (CPU) 501, a read-only memory (ROM) 502, a random access memory (RAM) 503, a hard disk (HD) 504, a hard disk drive (HDD) controller 505, a display 506, an external device interface (I/F) 508, a network interface (I/F) 509, a bus line 510, a keyboard 511, a pointing device 512, a digital versatile disc rewritable (DVD-RW) drive 514, and a medium interface (I/F) 516.

The CPU 501 controls the entire operation of the image processing apparatus 5 and the communication terminal 6 to which the CPU 501 belongs. The ROM 502 stores a program such as an initial program loader (IPL) used for driving the CPU 501. The RAM 503 is used as a work area for the CPU 501. The HD 504 stores various data such as a control program. The HDD controller 505 controls the reading and writing of various data from and to the HD 504 under the control of the CPU 501. The display 506 displays various information such as a cursor, a menu, a window, characters, and images. The external device I/F 508 is an interface for connection with various external devices. Examples of the external devices include, but are not limited to, a USB memory and a printer. The network I/F 509 is an interface for data communication through the communication network 2. The bus line 510 is, for example, an address bus or a data bus, which electrically connects the components or elements such as the CPU 501 illustrated in FIG. 2.

The keyboard 511 serves as an input device provided with a plurality of keys used for inputting characters, numerical values, and various instructions. The pointing device 512 serves as an input device used for selecting or executing various instructions, selecting an object for processing, and moving a cursor being displayed. The DVD-RW drive 514 controls the reading and writing of various data from and to a DVD-RW 513, which serves as a removable storage medium according to the present embodiment. The removable recording medium is not limited to the DVD-RW. For example, the removable recording medium may be a digital versatile disc recordable (DVD-R). The medium I/F 516 controls the reading and writing (storing) of data from and to a recording medium 515 such as a flash memory.

### <Function>

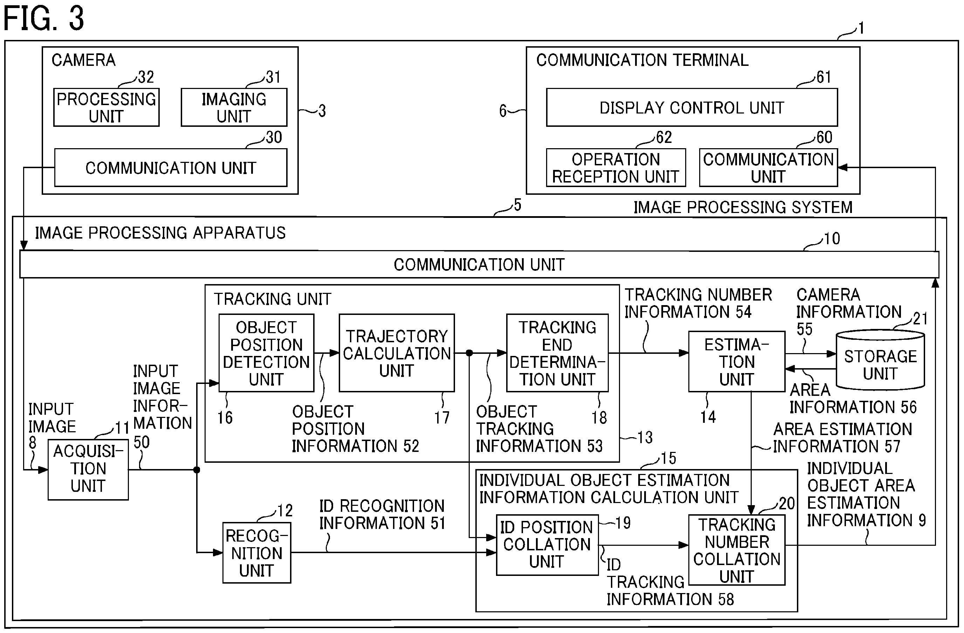

FIG. 3 is a block diagram illustrating a functional configuration of the image processing system 1 according to the present embodiment. The camera 3 includes a communication unit 30, an imaging unit 31, and a processing unit 32.

The communication unit 30 is a communication function the camera 3 has, and for example, transmits the input image 8 to the image processing apparatus 5 via the communication network 2.

The imaging unit 31 acquires the image information obtained by capturing an imaging range of the camera 3 using the functions of the camera 3. The image information may be, for example, monochrome image data in which one pixel is represented by 8 bits, or color image data in which one pixel is represented by 8 bits for each of the three colors of red, green, and blue (RGB). The image information may be referred to simply as an image.

The processing unit 32 compresses and encodes the image information acquired by the imaging unit 31 to generate compressed image data in which a still image or a moving image is compression-encoded. Further, the processing unit 32 generates the input image 8 including the compressed image data, a camera number for specifying the individual camera 3, and the time when the image information is obtained by the camera 3. In the present embodiment, the camera number is, for example, a unique number or character string for an individual camera.

The image processing apparatus 5 includes a communication unit 10, an acquisition unit 11, a recognition unit 12, a tracking unit 13, an estimation unit 14, and an individual object estimation information calculation unit 15. The tracking unit 13 includes an object position detection unit 16, a trajectory calculation unit 17, and a tracking end determination unit 18. The individual object estimation information calculation unit 15 includes an identification (ID) position collation unit 19 and a tracking number collation unit 20. These functional units provide functions implemented by the CPU 501 executing instructions included in one or more programs installed on the image processing apparatus 5. The storage unit 21 may be implemented by a storage device such as the HD 504 included in the image processing apparatus 5.

The communication unit 10 is a communication function that the image processing apparatus 5 has, and transmits and receives information to and from the camera 3 and the communication terminal 6 via the communication network 2. For example, the communication unit 10 receives the input image 8 from the camera 3. The communication unit 10 also transmits the individual object area estimation information 9 to the communication terminal 6.

The acquisition unit 11 acquires the input image 8 received by the communication unit 10 from the camera 3. The acquisition unit 11 also acquires the input image 8 stored in, for example, the storage unit 21 of the image processing apparatus 5. The acquisition unit 11 decodes the compression-encoded data included in the input image 8 to acquire the image information, and assigns an image number to an individual frame of the image information. The acquisition unit 11 generates input image information 50 including the image information, the image number, the camera number included in the input image 8, and the time when the image information is obtained included in the input image 8, and transmits the input image information 50 to the recognition unit 12 and the object position detection unit 16 of the tracking unit 13.

The recognition unit 12 uses the input image information 50 received from the acquisition unit 11 to recognize the ID described on the ID label 7 attached onto the target object 4, and calculates identification (ID) recognition information 51 as a recognition result. Further, the recognition unit 12 transmits the ID recognition information 51 to the ID position collation unit 19 included in the individual object estimation information calculation unit 15. That is, the recognition unit 12 uses an acquired image to recognize an ID assigned to a target obj ect.

The tracking unit 13 uses the input image information 50 received from the acquisition unit 11 of the image processing apparatus 5 to calculate object tracking information 53, and transmits the object tracking information 53 to the ID position collation unit 19 included in the individual object estimation information calculation unit 15. That is, the tracking unit 13 uses an acquired image to calculate the trajectory of the movement of a target object.

The object position detection unit 16 uses the input image information 50 to calculate object position information 52, and transmits the object position information 52 to the trajectory calculation unit 17 included in the tracking unit 13.

The trajectory calculation unit 17 uses the object position information 52 received from the object position detection unit 16 to calculate object tracking information 53, and transmits the object tracking information 53 to the tracking end determination unit 18 included in the tracking unit 13 and the ID position collation unit 19 included in the individual object estimation information calculation unit 15.

The tracking end determination unit 18 uses the object tracking information 53 received from the trajectory calculation unit 17 to determine whether the tracking of the target object 4 has ended for an individual tracking number. Further, the tracking end determination unit 18 calculates tracking number information 54 corresponding to the tracking number of the target object 4 for which the tracking is determined to have ended, and transmits the tracking number information 54 to the estimation unit 14.

The estimation unit 14 uses the tracking number information 54 received from the tracking unit 13 and area information 56 acquired from the storage unit 21 to calculate area estimation information 57, and transmits the area estimation information 57 to the tracking number collation unit 20 included in the individual object estimation information calculation unit 15. That is, the estimation unit 14 estimates an area where a target object is present based on a trajectory calculated by the tracking unit 13.

The individual object estimation information calculation unit 15 uses the ID recognition information 51 received from the recognition unit 12, the object tracking information 53 received from the tracking unit 13, and the area estimation information 57 received from the estimation unit 14 to calculate the individual object area estimation information 9. That is, the individual object estimation information calculation unit 15 uses the received information to calculate the individual object area estimation information 9 in which the ID recognized by the recognition unit 12 and the area estimated by the estimation unit 14 are associated with each other. The individual object estimation information calculation unit 15 transmits the individual object area estimation information 9 to the communication unit 10.

The ID position collation unit 19 uses the ID recognition information 51 and the object tracking information 53 to calculate identification (ID) tracking information 58, and transmits the ID tracking information 58 to the tracking number collation unit 20 included in the individual object estimation information calculation unit 15.

The tracking number collation unit 20 uses the ID tracking information 58 received from the ID position collation unit 19 and the area estimation information 57 received from the estimation unit 14 to calculate the individual object area estimation information 9, and transmits the individual object area estimation information 9 to the communication unit 10.

The communication terminal 6 includes a communication unit 60, a display control unit 61, and an operation reception unit 62. These functional units provide functions implemented by the CPU 501 executing instructions included in one or more programs installed on the communication terminal 6.

The communication unit 60 is a communication function that the communication terminal 6 has, and transmits and receives information to and from the image processing apparatus 5 via the communication network 2.

The display control unit 61 uses the individual object area estimation information 9 received from the image processing apparatus 5 to display, on, for example, the display 506 of the communication terminal 6, the display screen on which the ID of the target object 4 and the area where the target object 4 is estimated to be present are presented.

The operation reception unit 62 receives operations such as inputting characters and pressing buttons performed by the administrator via the keyboard 511 and the pointing device 512 of the communication terminal 6.

### Processing to Track Target Object

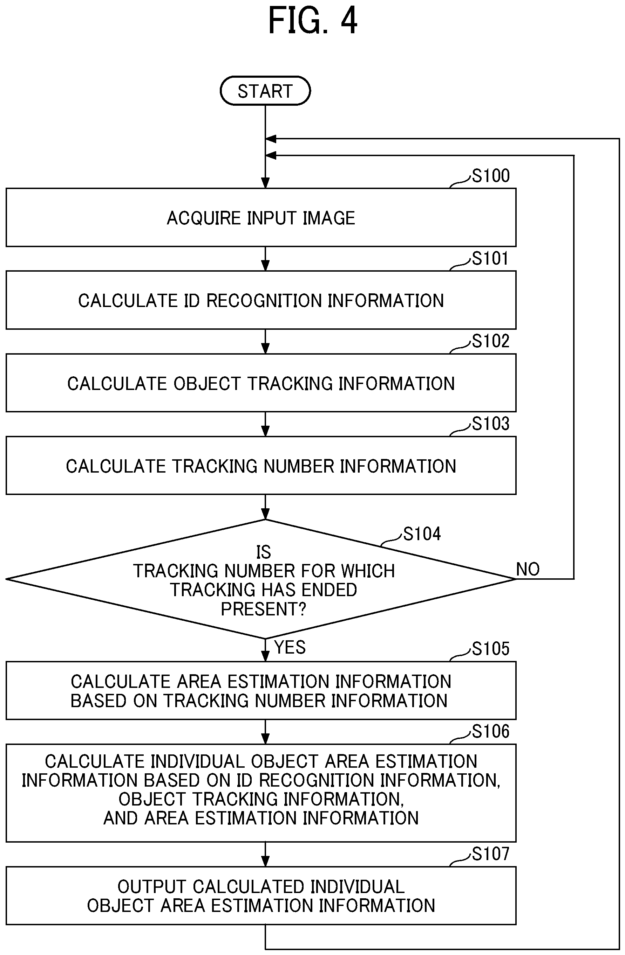

FIG. 4 is a flowchart of the processing to track the target object 4 according to the present embodiment. According to the flowchart, the image processing apparatus 5 uses the input image 8 received from the camera 3 to output the individual object area estimation information 9 including information on an area where an individual target object 4 is estimated to be present, and transmits the individual object area estimation information 9 to the communication terminal 6. The steps in the processing illustrated in FIG. 4 are described below.

Step S100: The acquisition unit 11 of the image processing apparatus 5 acquires the input image 8 that the communication unit 10 receives from the communication unit 30 of the camera 3 via the communication network 2. Alternatively, the acquisition unit 11 may acquire the input image 8 stored in, for example, the storage unit 21 of the image processing apparatus 5, instead of acquiring the input image 8 received from the communication unit 30 of the camera 3. The input image 8 includes the compression-encoded data obtained from an image captured by the camera 3, the camera number for specifying the individual camera 3, and the time when the image information is obtained by the camera 3.

The acquisition unit 11 decodes the compression-encoded data included in the input image 8 to acquire the image information, and assigns an image number to an individual frame of the image information. The image number may be unique to an individual frame or may be expressed as a combination of the camera number and the time when the image is captured.

The acquisition unit 11 generates the input image information 50 including the image information, the image number, the camera number included in the input image 8, and the time when the image information is obtained included in the input image 8, and transmits the input image information 50 to the recognition unit 12 and the object position detection unit 16 of the tracking unit 13. The acquisition unit 11 may generate the input image information 50 for the individual frame of the image information, or may generate the input image information 50 for an individual block formed of a plurality of frames of the image information.

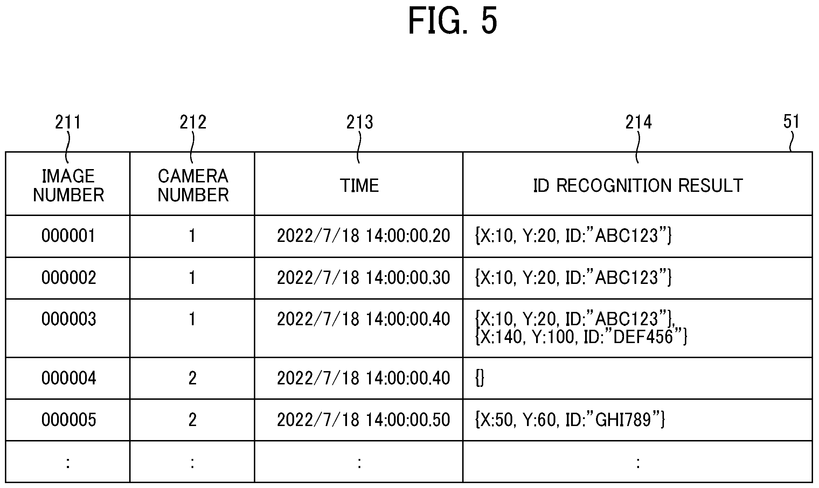

Step S101: The recognition unit 12 of the image processing apparatus 5 uses the input image information 50 received from the acquisition unit 11 of the image processing apparatus 5 to recognize the ID described on the ID label 7 attached onto the target object 4, and calculates the ID recognition information 51 as a recognition result. Further, the recognition unit 12 transmits the ID recognition information 51 to the ID position collation unit 19 included in the individual object estimation information calculation unit 15. The calculation method of the ID recognition information 51 will be described in detail later. FIG. 5 is a diagram illustrating the data structure of the ID recognition information 51 according to the present embodiment. The ID recognition information 51 illustrated in FIG. 5 includes, as data items, an image number 211, a camera number 212, a time 213, and an identification (ID) recognition result 214. The image number 211, the camera number 212, and the time 213 are an image number, a camera number, and a time corresponding to an image of one frame for which the identification recognition is performed, respectively. These pieces of information can be acquired from the input image 8. The ID recognition result 214 is a result of the identification recognition, and includes the position (e.g., coordinates of the center point) and the recognized ID of the ID label 7 detected in the image. For example, the ID recognition result 214 for the image whose image number 211 is "000001" is "{X: 10, Y: 20, ID: 'ABC123'}." This means that the X coordinate and the Y coordinate of the center point of the ID label 7 are "10" and "20," respectively, and the recognized ID is "ABC123." The center point is, for example, the coordinates of an intersection point of diagonal lines of a rectangle recognized as the region of the ID label 7. Alternatively, the coordinates of the upper left and lower right vertices of the rectangle may be indicated in the ID recognition result 214 instead of the coordinates of the center point. When the ID label 7 or the ID is not recognized, "{}" is indicated as the ID recognition result 214 for the image whose image number 211 is "000004." Referring back to FIG. 4, the description continues.

Step S102: The tracking unit 13 of the image processing apparatus 5 uses the input image information 50 received from the acquisition unit 11 of the image processing apparatus 5 to calculate the object tracking information 53, and transmits the object tracking information 53 to the ID position collation unit 19 included in the individual object estimation information calculation unit 15.

In this processing, the object position detection unit 16 included in the tracking unit 13 uses the input image information 50 to calculate the object position information 52, and transmits the object position information 52 to the trajectory calculation unit 17 included in the tracking unit 13. The object position detection unit 16 uses, for example, a deep-learning model for object detection that is learned in advance using the image of the target object 4 for the image included in the input image information 50 to detect the position coordinates of the target object 4 in the image regardless of whether the ID label 7 is captured by the camera 3. As a model for object detection, an object detection method such as template matching may be used instead of deep learning. The object position detection unit 16 combines the detected information (for example, coordinates of the upper left and lower right vertices of a rectangle) on the region in the image of the target object 4 and the information (the image number, the camera number, and the time) included in the input image information 50 together to calculate the object position information 52, and transmits the object position information 52 to the trajectory calculation unit 17 included in the tracking unit 13.

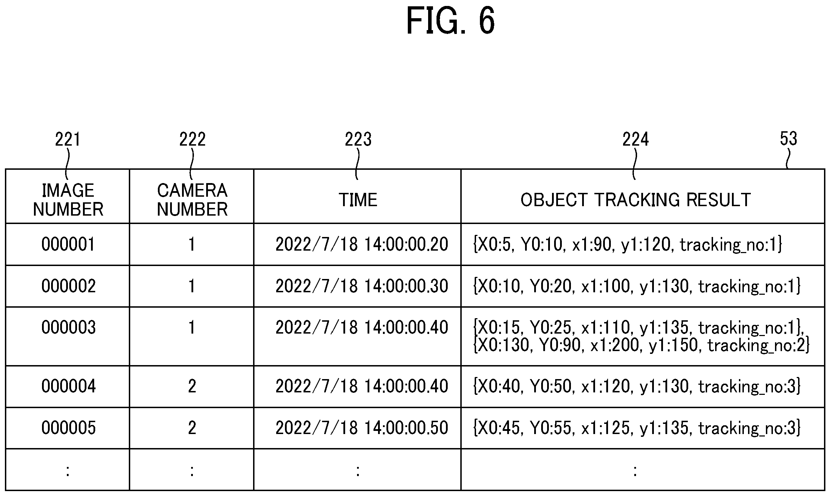

The trajectory calculation unit 17 included in the tracking unit 13 uses the object position information 52 to calculate the object tracking information 53, and transmits the object tracking information 53 to the tracking end determination unit 18 included in the tracking unit 13 and the ID position collation unit 19 included in the individual object estimation information calculation unit 15. The trajectory calculation unit 17 calculates the trajectory of the movement of the target object 4 by the following method. The trajectory calculation unit 17 divides the object position information 52 for an individual camera number, and arranges the divided pieces of the object position information 52 in time series. Subsequently, the trajectory calculation unit 17 uses the region in the image of the target object 4 detected by a certain camera at a certain time and the region in the image of the target object 4 detected at the previous time to calculate the Intersection over Union (IoU), which is an index indicating the degree of overlap of the regions. When the IoU exceeds a certain threshold value, the trajectory calculation unit 17 regards these two objects as the same individual object, and assigns the same tracking number to these two objects to track the target object 4 and calculate a trajectory of the movement of the target object 4. Alternatively, Kalman filtering and deep learning, alone or in combination, may be used as the tracking method. The trajectory calculation unit 17 combines the assigned tracking number and the information (the image number, the camera number, and the time) included in the input image information 50 together to generate the object tracking information 53. FIG. 6 is a diagram illustrating the data structure of the object tracking information 53 according to the present embodiment. The object tracking information 53 illustrated in FIG. 6 includes, as data items, an image number 221, a camera number 222, a time 223, and an object tracking result 224. The image number 221, the camera number 222, and the time 223 are an image number, a camera number, and a time corresponding to an image of the target object 4 for which the trajectory of the movement is calculated, respectively, and information thereof can be acquired from the input image 8. The object tracking result 224 is a result of tracking an object, and includes the position information and the tracking number of the target object 4 that has been tracked. For example, the object tracking result 224 for the image whose image number 221 is "000001" is "{X0: 5, Y0: 10, x1: 90, y1: 120, tracking_no: 1}." In the object tracking result 224, the coordinates of two diagonal vertices (the upper left and lower right vertices) in a rectangular region in the image of the detected target object 4 are indicated as the position information of the target object 4 that has been tracked. Alternatively, the width and height of the rectangular region or the coordinates of all pixels of the rectangular region in the image of the detected target object 4 may be indicated as the position information of the target object 4 that has been tracked. In the object tracking result 224, "tracking_no: 1" is also indicated as information indicating the tracking number. The object tracking result 224 for the image whose image number 221 is "000003" is "{X0: 15, Y0: 25, x1: 110, y1: 135, tracking_no: 1} and {X0: 130, Y0: 90, x1: 200, y1: 150, tracking_no: 2}." In this case, the position information and the tracking numbers for two different target objects 4 are indicated in the object tracking result 224. Referring back to FIG. 4, the description continues.

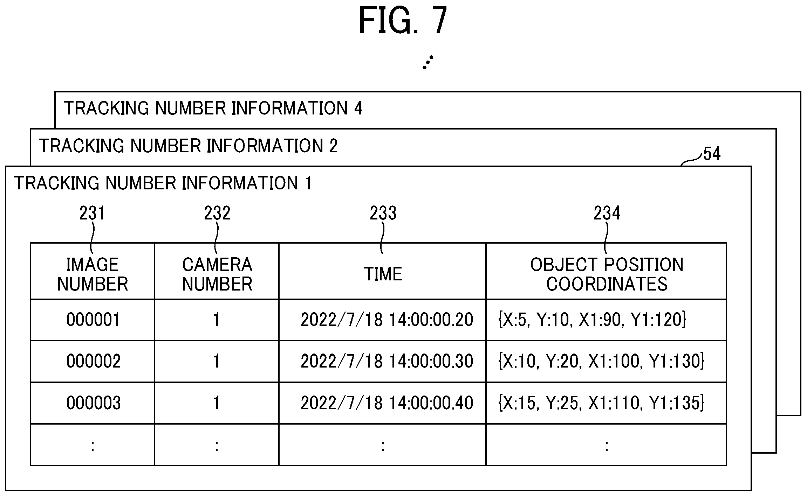

Step S103: The tracking unit 13 of the image processing apparatus 5 calculates the tracking number information 54, and transmits the tracking number information 54 to the estimation unit 14. In this processing, the tracking end determination unit 18 of the tracking unit 13 uses the object tracking information 53 received from the trajectory calculation unit 17 to determine whether the tracking of the target object 4 has ended. The tracking end determination unit 18 divides the object tracking information 53 received from the trajectory calculation unit 17 for an individual tracking number to generate tracking number division information. At this point, when another tracking number appears, the other tracking number is held as the tracking number division information of a new tracking number. When a tracking number appeared in the past appears again, the information of the tracking number is added to the end of the held tracking number division information. As described above, the tracking number information 54 in which tracking results of the target objects 4 are arranged in time series for an individual tracking number is generated. FIG. 7 is a diagram illustrating the data structure of the tracking number information 54 according to the present embodiment. The tracking number information 54 illustrated in FIG. 7 includes, as data items, an image number 231, a camera number 232, a time 233, and an object position coordinates 234 for an individual tracking number. These items are the same information as the items of the image number 221, the camera number 222, the time 223, and the object tracking result 224 of the object tracking information 53 illustrated in FIG. 6, respectively. Note that, in the object position coordinates 234, the information relating to the tracking number in the object tracking result 224 is excluded and only the position information of the target object 4 is indicated. Referring back to FIG. 4, the description continues.

The tracking end determination unit 18 included in the tracking unit 13 determines whether the tracking has ended for an individual tracking number. The tracking end determination unit 18 determines that the tracking has ended when either of the following two conditions is satisfied.

The first condition is the case where the target object 4 moves out of the imaging range of the camera 3. To perform the determination based on the first condition, the tracking end determination unit 18 refers to the latest time in the tracking number information 54 for an individual tracking number. When the latest time has not been updated for more than a predetermined period of time such as five seconds, the tracking end determination unit 18 regards that the target object 4 corresponding to the tracking number has moved out of the imaging range of the camera 3 and determines that the tracking of the target object 4 has ended. That is, the tracking end determination unit 18 determines whether to end tracking of a target object based on the time period during which the trajectory of the movement of the target object is not updated.

The second condition is the case where the target object 4 stops in the imaging range of the camera 3. The tracking end determination unit 18 compares, for an individual tracking number, the coordinates of the center position of the target object 4 at the latest time in the tracking number information 54 with the coordinates of the center position of the target object 4 at a predetermined time period (for example, five seconds) before the latest time. In the case that the coordinates of the center position of the target object 4 at the latest time have not moved more than a certain threshold value (for example, 50 pixels), the tracking end determination unit 18 determines that the tracking of the target object 4 has ended. That is, the tracking end determination unit 18 determines whether to end tracking of a target object based on the amount of movement of the target object in a predetermined period of time. The predetermined period of time is, for example, defined by a designer or a manufacturer. When the coordinates of the center position of the target object 4 move a certain threshold value or more next time, the tracking end determination unit 18 may resume the tracking of the target object 4 with the same tracking number as before.

Step S104: When a tracking number of the target object 4 for which the tracking end determination unit 18 determines that the tracking has ended is present (YES in step S104), the tracking unit 13 of the image processing apparatus 5 transitions to the processing of step S105. Otherwise (NO in step S104), the tracking unit 13 transitions to the processing of step S100.

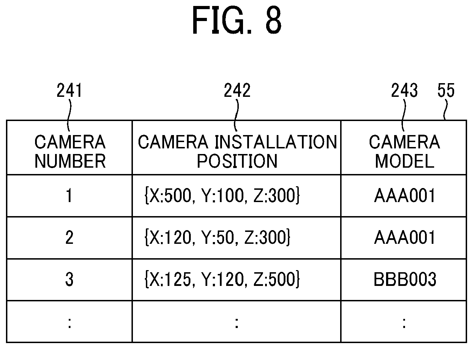

Step S105: The estimation unit 14 of the image processing apparatus 5 uses the tracking number information 54 received from the tracking unit 13 and the area information 56 acquired from the storage unit 21 to calculate the area estimation information 57, and transmits the area estimation information 57 to the individual object estimation information calculation unit 15. In this processing, the estimation unit 14 stores the camera information 55 including the camera number included in the tracking number information 54 in the storage unit 21 of the image processing apparatus 5. FIG. 8 is a diagram illustrating the data structure of the camera information 55 according to the present embodiment. The camera information 55 illustrated in FIG. 8 includes, as data items, a camera number 241, a camera installation position 242, and a camera model 243. The camera number 241 is a number that specifies the individual camera 3. The camera installation position 242 indicates a position where the camera 3 is installed. For example, {X: 500, Y: 100, Z: 300} in the camera installation position 242 indicates that the camera is installed at a distance of five meters in the horizontal direction, one meter in the depth direction, and three meters in the vertical direction from a reference point of the room where the camera is installed. The camera model 243 is information that indicates the model of the camera. The camera information 55 may include, in addition to these items, items indicating an installation angle or an imaging range of the camera. All items of the camera information 55 may be included in the input image 8 each time the input image 8 is transmitted from the camera 3. Alternatively, after the first transmission, the items of the camera information 55 other than the camera number 241 may be included in the input image 8 at regular intervals of the transmission or only when the information is updated. Referring back to FIG. 4, the description continues.

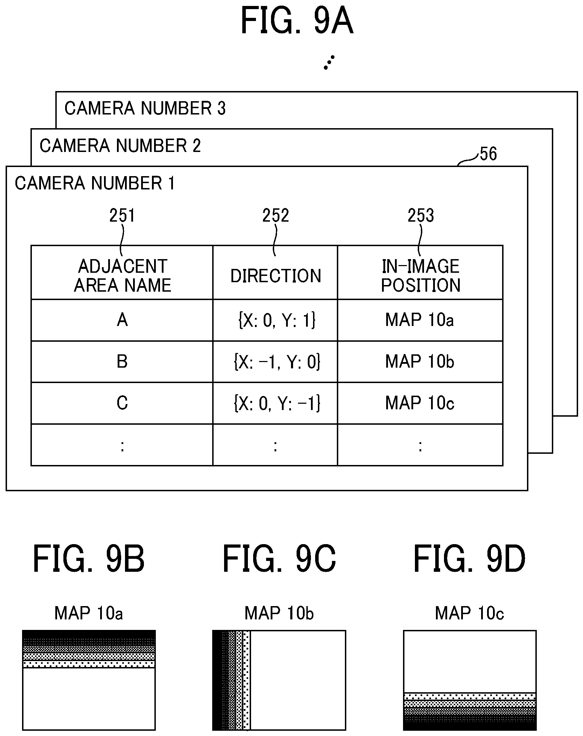

The estimation unit 14 of the image processing apparatus 5 acquires, from the storage unit 21 of the image processing apparatus 5, the area information 56 corresponding to the camera information 55 received from the estimation unit 14. FIG. 9A is a diagram illustrating the data structure of the area information 56 according to the present embodiment. FIGS. 9B to 9D are diagrams each illustrating a heat map of an in-image position 253 according to the present embodiment. The area information 56 illustrated in FIG. 9A includes, as data items, an adjacent area name 251, a direction 252, and the in-image position 253. The adjacent area name 251 is the name of an area adjacent to the imaging range of the camera 3 corresponding to the camera number. A direction 252 indicates the direction of the area adjacent to the imaging range in the image captured in the imaging range of the camera 3 corresponding to the camera number. For example, "{X: 0, Y: 1}" indicates an upward direction in the image, "{X: -1, Y: 0}" indicates a left direction in the image, and " {X: 0, Y: -1}" indicates a downward direction in the image. That is, the "X" indicates the horizontal direction of the image. "X = -1" indicates the left, "X = 1" indicates the right, and "X = 0" indicates the middle. The "Y" indicates the vertical direction of the image. "Y = -1" indicates the lower, "Y = 1" indicates the upper, and "Y = 0" indicates the middle. The oblique upper right direction may be indicated by " {X: 1, Y: 1}." The in-image position 253 is a heat map indicating the direction of the area adjacent to the imaging range. As the place in the imaging range is closer to the area adjacent to the imaging range, the color of the place is indicated darker. The in-image positions 253 corresponding to "A," "B," and "C" of the adjacent area names 251 are "map 10a" in FIG. 9B, "map 10b" in FIG. 9C, and "map 10c" in FIG. 9D, respectively. The area information 56 may further include information such as the position where the camera is installed, the imaging range of the camera, and the correspondence between the entire map and the area.

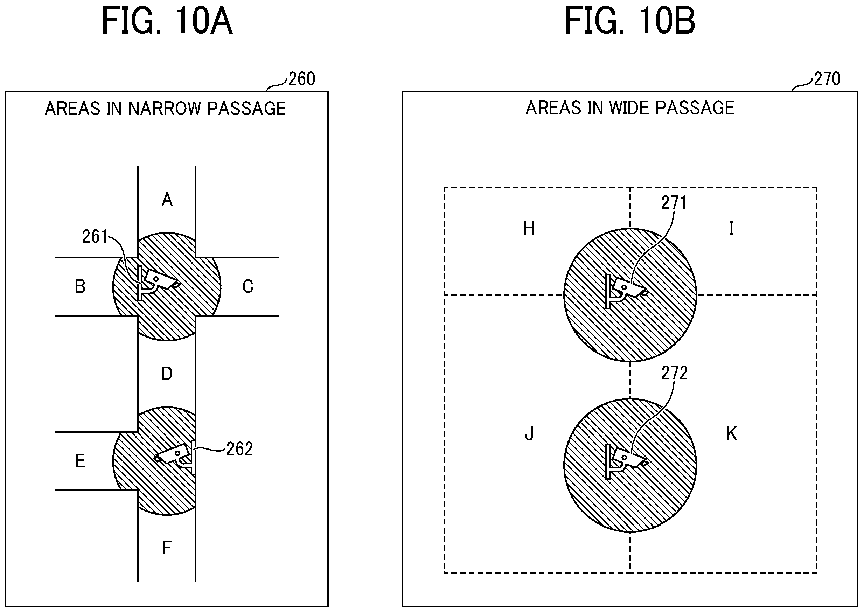

FIGS. 10A and 10B are diagrams each illustrating the areas and the imaging ranges of the cameras according to the present embodiment. An explanatory diagram 260 of FIG. 10A is given by way of example for illustrating a narrow passage. In the explanatory diagram 260, six areas A to F are illustrated. The IDs of the target objects in the six areas are managed on an area by area basis. In the explanatory diagram 260, a total of two cameras are installed. A camera 261 is installed at the intersection and a camera 262 is installed at the Tjunction. By arranging the cameras in this manner, when the target objects move across the areas, the target objects necessarily enter the imaging range (hatched region) of either of the cameras. Accordingly, as many cameras to capture the entire passage of all the passages are not necessarily to be installed. By installing the minimum number of cameras, all the areas where the tacking objects are present can be estimated.

An explanatory diagram 270 of FIG. 10B is given by way of example for illustrating a wide passage. In the explanatory diagram 270, four areas H to K are illustrated. The IDs of the target objects in the four areas are managed on an area by area basis. In the explanatory diagram 270, a camera 271 is installed at the branch point of the four areas, and a camera 272 is installed on the boundary line between the area J and the area K. In this case, the cameras may be installed such that the length of each boundary line which does not fall within the imaging ranges (hatched regions) of the cameras is shorter than whichever shortest of the widths or lengths of the target objects. As a result, when the target objects move across the areas, the target objects necessarily enter the imaging range (hatched region) of either of the cameras. Accordingly, as many cameras to capture the entire passage of all the passages are not necessarily to be installed. By installing the minimum number of cameras, all the areas where the tacking objects are present can be estimated.

The imaging range of each camera may be divided to be included in one or more areas adjacent to the imaging range, or may be separately given an area name such as "the first camera" as an individual area. The area information 56 corresponding to the camera 261 in the explanatory diagram 260 includes at least the names of areas A to D adjacent to the imaging range and information indicating the direction of each of the areas A to D in the image captured by the camera 261. When the imaging range of the camera is included in one or more areas adjacent to the imaging range, the area information 56 also includes information (such as the positions of the boundary lines) on how the imaging range is divided. Referring back to FIG. 4, the description continues.

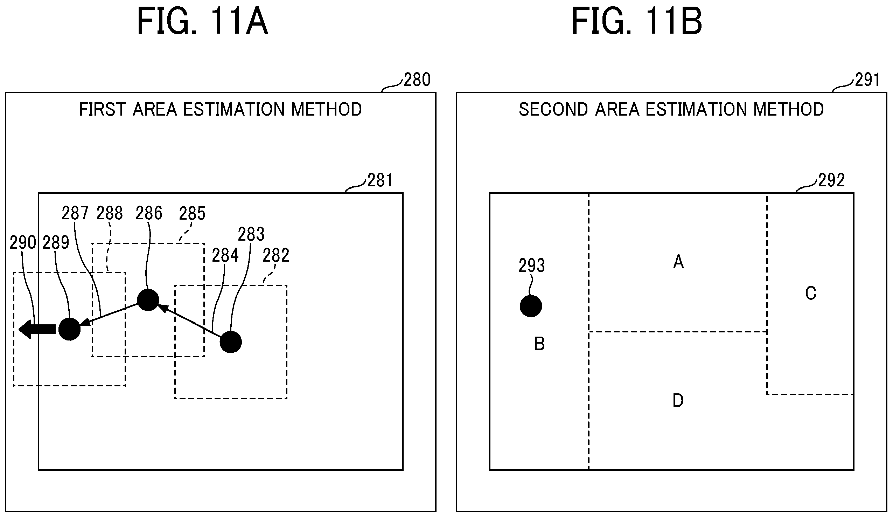

Finally, the estimation unit 14 of the image processing apparatus 5 uses the tracking number information 54 received from the tracking unit 13 and the area information 56 acquired from the storage unit 21 to calculate the area estimation information 57, and transmits the area estimation information 57 to the tracking number collation unit 20 of the individual object estimation information calculation unit 15. FIGS. 11A and 11B are diagrams each illustrating an area estimation method according to the present embodiment. An explanatory diagram 280 in FIG. 11A and an explanatory diagram 291 in FIG. 11B are given by way of example for illustrating the first and second area estimation methods in the imaging range of the camera 261 illustrated in FIG. 10A, respectively.

According to the first area estimation method of the explanatory diagram 280, first, the estimation unit 14 extracts, retroactively from the latest time, a certain number of pieces (for example, three pieces) of the object position coordinates 234 of the target object for a specific tracking number in the tracking number information 54 of FIG. 7 received from the tracking unit 13. In the explanatory diagram 280, based on the pieces of the object position coordinates 234 extracted by the estimation unit 14, three object position regions 282, 285, and 288 of the target object and respective center positions 283, 286, and 289 of the object position regions are indicated in a captured image 281 captured by the camera 261 in time series. In addition, in the explanatory diagram 280, a trajectory 284 connecting the center positions 283 and 286 of the target object and a trajectory 287 connecting the center positions 286 and 289 of the target object are indicated. The estimation unit 14 uses these object tracking results to predict a future trajectory 290. For the prediction, for example, machine learning including a deep learning model is used. Further, the estimation unit 14 calculates the area B as an area in a direction in which the target object is estimated to move based on the future trajectory 290 predicted by the estimation unit 14 and the direction 252 in the area information 56 of FIG. 9A acquired from the storage unit 21. That is, the estimation unit 14 estimates the area where the target object is present based on the direction in which the target object is estimated to move in the future on the basis of the trajectories created by the target object having moved and the direction of the area adjacent to the imaging range in the image captured in the imaging range of the camera.

According to the second area estimation method of the explanatory diagram 291, first, the areas adjacent to the imaging range in a captured image 292 captured by the camera 261 are separated in advance. The separation may be performed manually or automatically by using the direction 252 or the in-image position 253 of the area information 56 in FIG. 9A. The estimation unit 14 calculates the coordinates of the center position of the target object based on the object position coordinates 234 of the target object at the latest time for the specific number of the tracking number information 54. The estimation unit 14 determines that the target object has moved to an area corresponding to the area of the position where the image of the target object is last captured by the camera 261. Then, the estimation unit 14 calculates an area in the direction in which the target object is estimated to move based on which area separated in advance the coordinates of the center position of the target object belong to. According to the explanatory diagram 291, since the center position 293 of the target object last tracked is in the range corresponding to the area B, the estimation unit 14 calculates the area B as an area in the direction in which the target object is estimated to move. In other words, the estimation unit 14 estimates the area where the target object is present based on the position where the target object is last detected.

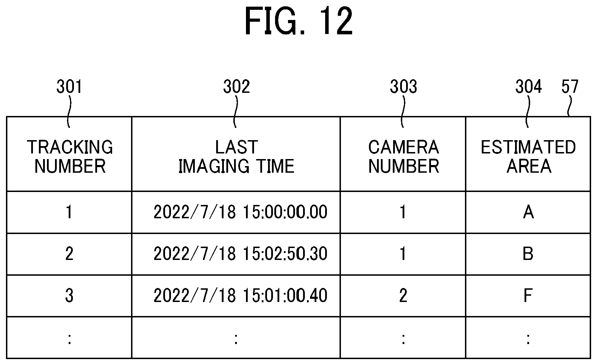

FIG. 12 is a diagram illustrating the data structure of the area estimation information 57 according to the present embodiment. The area estimation information 57 in FIG. 12 includes, as data items, a tracking number 301, a last imaging time 302, a camera number 303, and an estimated area 304. The tracking number 301 is a tracking number corresponding to the target object for which the estimation unit 14 has calculated the estimated area. The last imaging time 302 is the time when the image of the target object for which the estimation unit 14 has calculated the estimated area is last captured. The camera number 303 is a number that identifies the camera that has captured the image of the target object for which the estimation unit 14 has calculated the estimated area. The estimated area 304 is the name of the area where the target object for which the estimation unit 14 has calculated the estimated area is present. Referring back to FIG. 4, the description continues.

Step S106: The individual object estimation information calculation unit 15 of the image processing apparatus 5 uses the ID recognition information 51 received from the recognition unit 12, the object tracking information 53 received from the tracking unit 13, and the area estimation information 57 received from the estimation unit 14 to calculate the individual object area estimation information 9. The individual object estimation information calculation unit 15 transmits the individual object area estimation information 9 to the communication unit 10. In this processing, the ID position collation unit 19 included in the recognition unit 12 uses the ID recognition information 51 and the object tracking information 53 to calculate the ID tracking information 58, and transmits the ID tracking information 58 to the tracking number collation unit 20. The ID position collation unit 19 checks whether any recognition result is present in the ID recognition result 214 of the ID recognition information 51. When the recognition result is present, the ID position collation unit 19 selects the target object indicated by the object tracking result 224 of the object tracking information 53 that is closest to the position of the ID label indicated by the ID recognition result 214. Further, the ID position collation unit 19 acquires the tracking number of the selected target object and calculates the ID tracking information 58 including the ID described on the ID label and the acquired tracking number.

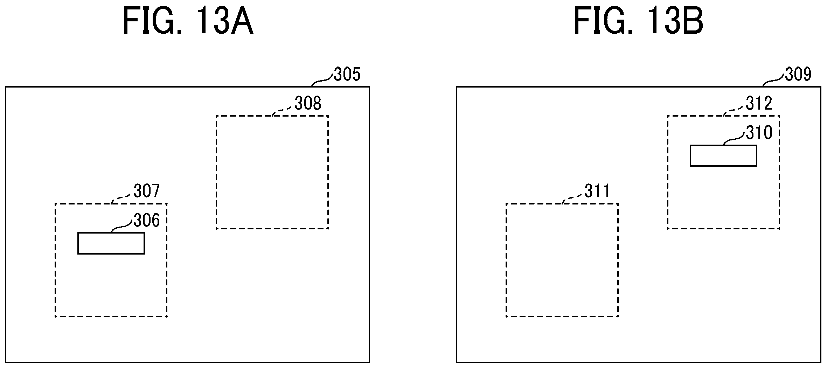

FIGS. 13A and 13B are diagrams each illustrating a method for associating the ID label and the target object with each other according to the present embodiment. In a captured image 305 of FIG. 13A, an identification (ID) label region 306 that is the region of a detected ID label and target object regions 307 and 308 that are the regions of two different target objects are indicated. At this time, the ID position collation unit 19 selects the target object region 307 that is closest to the ID label region 306 and acquires the tracking number of the target object corresponding to the target object region 307. Thus, the ID corresponding to the ID label region 306 and the target object are associated with each other. In a captured image 309 of FIG. 13B that is captured at the time after the captured image 305 is captured, an ID label region 310 that is the region of another detected ID label different from the detected ID label corresponding to the region of the ID label region 306 and target object regions 311 and 312 that are the regions of two different target objects are indicated. The target object regions 311 and 312 are the regions of the target objects having the same tracking numbers as the tracking numbers of the target objects corresponding to the target object regions 307 and 308, respectively. At this time, the ID position collation unit 19 selects the target object region 312 that is closest to the ID label region 310 and acquires the tracking number of the target object corresponding to the target object region 312. Thus, the ID corresponding to the ID label region 310 and the target object are associated with each other. Since the target object region 311 is already associated with the other ID, the ID position collation unit 19 may select only the target object region 312 that is not associated with the other ID. Further, when the association between the ID and the target object is completed, the ID position collation unit 19 may perform the association between the ID and the target object by going back to the past time when the ID was not recognized. Alternatively, the association between the ID and the target object may be performed based on the distance between the center position of the ID label region and the target object region, or based on whether the center position of the ID label region is overlapped by the region of the target object. Referring back to FIG. 4, the description continues.

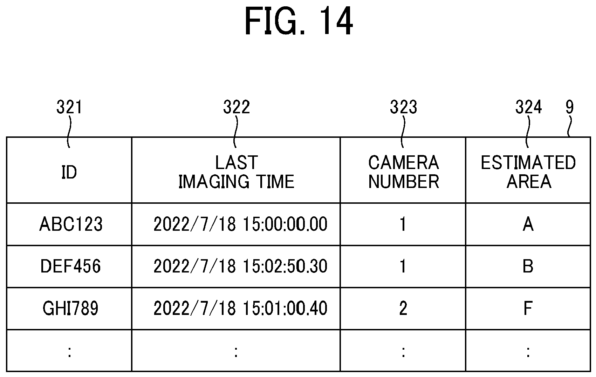

The tracking number collation unit 20 included in the recognition unit 12 uses the ID tracking information 58 received from the ID position collation unit 19 and the area estimation information 57 received from the estimation unit 14 to calculate the individual object area estimation information 9, and transmits the individual object area estimation information 9 to the communication unit 10. That is, the tracking number collation unit 20 uses the ID tracking information 58 to calculate the individual object area estimation information 9 by replacing the tracking number 301 of the area estimation information 57 in FIG. 12 with the corresponding ID. FIG. 14 is a diagram illustrating the data structure of the individual object area estimation information 9 according to the present embodiment. The individual object area estimation information 9 illustrated in FIG. 14 includes, as data items, an identification (ID) 321, a last imaging time 322, a camera number 323, and an estimated area 324. The ID 321 is an ID calculated by the tracking number collation unit 20 using the ID tracking information 58 to replace the tracking number 301 of the area estimation information 57 in FIG. 12 with the corresponding ID. The last imaging time 322, the camera number 323, and the estimated area 324 are the same information as the last imaging time 302, the camera number 303, and the estimated area 304 of the area estimation information 57 in FIG. 12, respectively. That is, the individual object estimation information calculation unit 15 associates the position where the ID is detected and the trajectories created by the target object having moved to calculate the individual object area estimation information 9. Referring back to FIG. 4, the description continues.

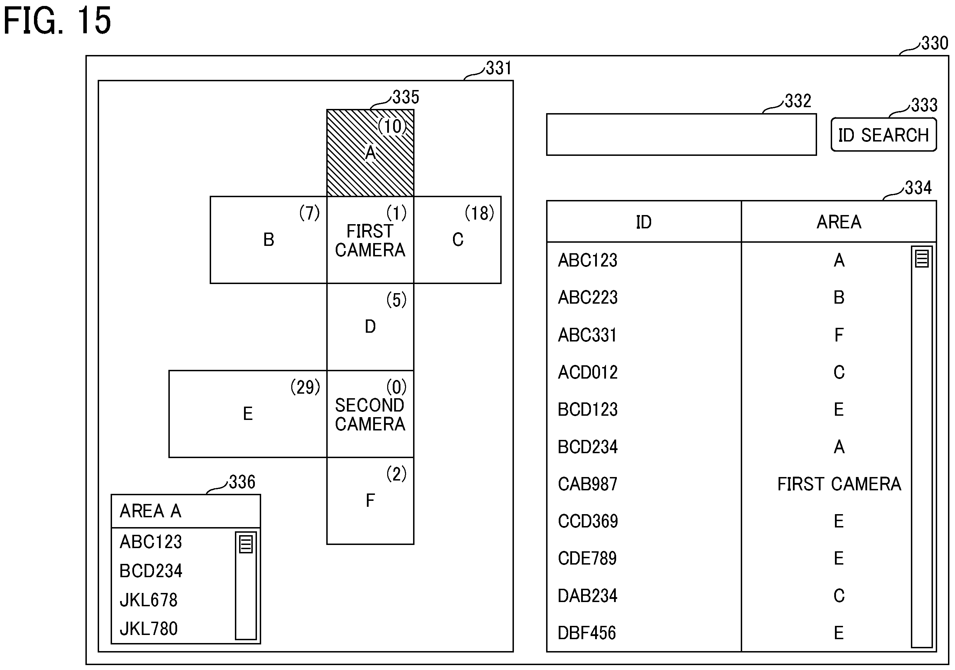

Step S107: The communication unit 10 of the image processing apparatus 5 transmits the individual object area estimation information 9 received from the individual object estimation information calculation unit 15 to the communication unit 60 of the communication terminal 6 via the communication network 2. The display control unit 61 of the communication terminal 6 displays a display screen on the display 506 of the communication terminal 6 based on the individual object area estimation information 9. FIG. 15 is a diagram illustrating a display screen 330 displayed on the communication terminal 6 according to the present embodiment. The display screen 330 illustrated in FIG. 15 includes a map display field 331, an input field 332, a search start button 333, and an area by identification (ID) display field 334. The map display field 331 includes a map 335 and designated area information 336. The map 335 is a map of the warehouse managed by the administrator. On the map 335, the names of the areas (A to F, first camera, second camera) are indicated, and the number of containers in each area is indicated at the upper right of the region of each area. In the designated area information 336, the IDs of the containers in the designated area (hatched area A in this case) are indicated. By moving the scroll button on the right side of the designated area information 336, IDs that are currently not indicated are indicated. In the area by ID display field 334, the IDs of all the containers and the areas where the containers are estimated to be present, which are included in the individual object area estimation information 9 received by the communication terminal 6, are indicated. By moving the scroll button on the right side of the area by ID display field 334, IDs and areas that are currently not indicated are indicated. When an ID of the container to be searched for is input to the input field 332 and the search start button 333 is pressed by the administrator, the ID of the searched container and the area where the searched container is estimated to be present are indicated in the area by ID display field 334.

### Processing of Identification Recognition

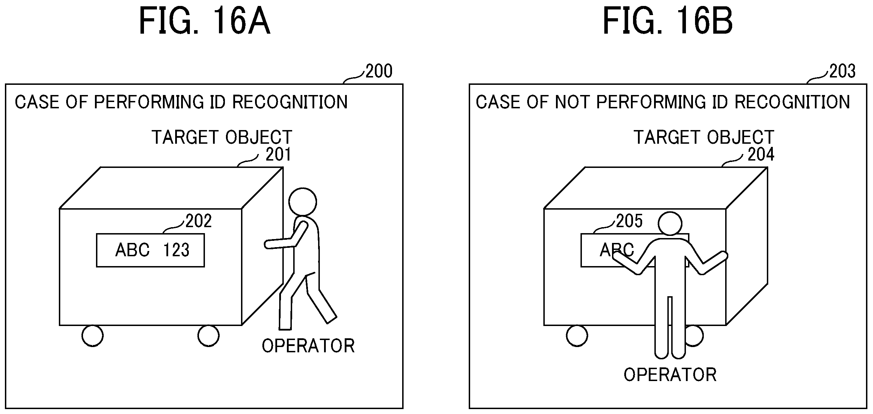

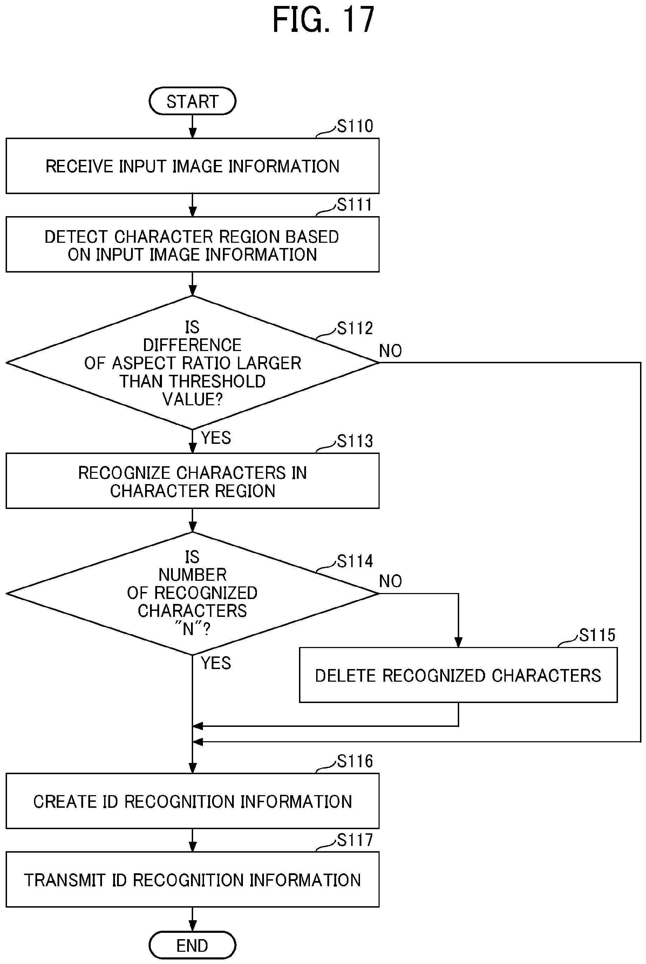

A calculation method for calculating the ID recognition information 51 by the recognition unit 12 of the image processing apparatus 5 in the processing of step S101 in FIG. 4 is described in detail below. FIGS. 16A and 16B are diagrams each illustrating the processing of identification recognition according to the present embodiment. A captured image 200 illustrated in FIG. 16A indicates the case where the ID recognition is performed. A captured image 203 illustrated in FIG. 16B indicates the case where the ID recognition is not performed. In the captured image 200, since an ID label 202 attached onto a target object 201 is completely captured without being hidden, the ID (ABC123) described on the ID label 202 can be recognized using the optical character recognition (OCR) technology. On the other hand, in the captured image 203, since a part of an ID label 205 attached onto a target object 204 is hidden by an operator, the ID described on the ID label 205 cannot be recognized. That is, the recognition unit 12 determines whether to perform the identification recognition based on the result of the character recognition by the OCR executed on the captured image. When the ID recognition is performed, the recognition unit 12 includes the position of the ID label and the information on the recognized ID in the ID recognition result 214 of the ID recognition information 51. The processing of the identification recognition performed by the recognition unit 12 is described in detail below, with reference to a flowchart. FIG. 17 is the flowchart of the processing of identification recognition according to the present embodiment.

Step S 110: The recognition unit 12 of the image processing apparatus 5 receives the input image information 50 from the acquisition unit 11 of the image processing apparatus 5. As described in the processing of step S100 in FIG. 4, the input image information 50 includes the image information (that may be referred to simply as an image in the following description) captured by the camera 3.

Step S111: The recognition unit 12 of the image processing apparatus 5 performs character recognition based on the OCR technology on the image included in the input image information 50, and detects a region (character region) where characters are present.

Step S112: The recognition unit 12 of the image processing apparatus 5 calculates the aspect ratio of the character region. When the difference from the predetermined aspect ratio is determined to be larger than the predetermined threshold value (YES in step S112), the processing proceeds to step S113. Otherwise (NO in step S112), the processing proceeds to step S116. That is, the recognition unit 12 determines whether the ID can be recognized based on the aspect ratio of the region (character region) where the ID detected in the acquired image is present. In the present embodiment, the ID label has a rectangular shape, and the predetermined aspect ratio is the ratio of the length of the ID label in the vertical direction and the length in the horizontal direction. The character region is detected such that the shape of the character region is rectangular. In this case, the ratio may be calculated by correcting the region that is distorted into a trapezoid due to the imaging angle of the camera into a rectangle.

Step S113: The recognition unit 12 of the image processing apparatus 5 recognizes the characters in the character region.

Step S114: When the number of recognized characters is N (YES in S114), the recognition unit 12 of the image processing apparatus 5 transitions to the processing of step S116. Otherwise (NO in step S114), the recognition unit 12 of the image processing apparatus 5 transitions to the processing of step S115. In the present embodiment, N is a predetermined number of characters of the ID described on the ID label. When the number of recognized characters does not coincide with N, it means that the ID is not correctly recognized. That is, the recognition unit 12 determines whether the ID can be recognized based on the number of characters recognized by the OCR on the ID. Alternatively, the recognition unit 12 may determine whether the ID is correctly recognized based on other conditions, for example, the number of characters excluding the first three characters that may be limited to alphabets.

Step S115: The recognition unit 12 of the image processing apparatus 5 deletes the recognized characters.

Step S116: The recognition unit 12 of the image processing apparatus 5 sets the position of the detected ID label and the recognized ID in the ID recognition result 214 to generate the ID recognition information 51. When a plurality of character regions is detected in step S111, the recognition unit 12 repeatedly executes the processing from step S112 to step S116 for each character region.

Step S117: The recognition unit 12 of the image processing apparatus 5 transmits the ID recognition information 51 to the individual object estimation information calculation unit 15 of the image processing apparatus 5.

With the above-described processing, the image processing system 1 can track a moving object (target object) and specify the position of the moving object even when the ID of the moving object is not continuously captured by a camera. The reason for this is that even when the ID of the moving object is not captured by the camera (is not recognized), the moving object is individually detected and tracked. Then, when the ID of the moving object is recognized, the moving object and the ID are associated with each other.

While some embodiments of the present disclosure have been described, the present disclosure is not limited to such embodiments and may be modified and substituted in various ways without departing from the spirit of the present disclosure.

For example, the functional configuration illustrated in FIG. 3 is divided according to main functions in order to facilitate understanding of the processing executed by the image processing system 1 and the image processing apparatus 5. No limitation to the scope of the present disclosure is intended by how the processing units are divided or by the names of the processing units. The processing units executed by the image processing system 1 and the image processing apparatus 5 may be divided into a greater number of processing units in accordance with the contents of the processing units. In addition, a single processing unit can be divided to include a greater number of processing units.

Each function of the embodiments described above may be implemented by one processing circuit or a plurality of processing circuits. The "processing circuit or circuitry" herein includes a programmed processor to execute each function by software, such as a processor implemented by an electronic circuit, and devices, such as an application specific integrated circuit (ASIC), a digital signal processor (DSP), a field programmable gate array (FPGA), and circuit modules known in the art arranged to perform the recited functions.

The apparatuses or devices described in the above-described embodiments are merely one example of plural computing environments that implement the embodiments disclosed herein. In some embodiments, each of the image processing system 1 and the image processing apparatus 5 includes a plurality of computing devices, such as a server cluster. The computing devices communicate one another through any type of communication link including, for example, a network or a shared memory, and performs the operations disclosed herein.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. An image processing apparatus (5) communicable with an image capturing apparatus (3), the image processing apparatus (5) comprising:
an acquisition unit (11) configured to acquire an image of an imaging range of the image capturing apparatus (3), captured by the image capturing apparatus (3);
a recognition unit (12) configured to recognize an identification that identifies an individual target object included in the image;
a trajectory calculation unit (17) configured to calculate a trajectory of positions between which the target object included in the image moves;
an estimation unit (14) configured to estimate an area in which the target object is present based on the trajectory; and
an individual object estimation information calculation unit (15) configured to acquire the trajectory based on the positions at which the identification of the target object is recognized and obtain individual area estimation information associating the estimated area corresponding to the acquired trajectory and the identification of the target object.

2. The image processing apparatus (5) according to claim 1, wherein the recognition unit (12) determines whether the identification is recognizable based on an aspect ratio of a region in which the identification in the image is included.

3. The image processing apparatus (5) according to claim 1, wherein the recognition unit (12) determines whether the identification is recognizable based on a number of characters in the identification.

4. The image processing apparatus (5) according to claim 1, further comprising a tracking end determination unit (18) configured to determine whether to end tracking of the target object based on a time period during when the trajectory is not updated.

5. The image processing apparatus (5) according to claim 1, further comprising a tracking end determination unit (18) configured to determine whether to end tracking of the target object based on an amount of movement of the target object in a predetermined period of time.

6. The image processing apparatus (5) according to claim 1, wherein the estimation unit (14) estimates the area in which the target object is present based on a direction in which the target object is estimated to move in a future on a basis of the trajectory and a direction of another area adjacent to an area of the imaging range in the image.

7. The image processing apparatus (5) according to claim 1, wherein the estimation unit (14) estimates the area in which the target object is present based on a position in which the target object is last detected.

8. An image processing system (1) comprising:
an image capturing apparatus (3); and
an image processing apparatus (5) communicable with the image capturing apparatus (3),
the image processing apparatus (5) including:
an acquisition unit (11) configured to acquire an image of an imaging range of the image capturing apparatus (3), captured by the image capturing apparatus (3);
a recognition unit (12) configured to recognize an identification that identifies an individual target object included in the image;
a trajectory calculation unit (17) configured to calculate a trajectory of positions between which the target object included in the image moves;
an estimation unit (14) configured to estimate an area in which the target object is present based on the trajectory; and
an individual object estimation information calculation unit (15) configured to acquire the trajectory based on the positions at which the identification of the target object is recognized and obtain individual area estimation information associating the estimated area corresponding to the acquired trajectory and the identification of the target object.

9. The image processing system (1) according to claim 8, further comprising a communication terminal (6) including:
a communication unit (10) configured to receive the individual area estimation information from the image processing apparatus (5); and
a display control unit (61) configured to display, on a display, the identification and the area in which the target object attached with the identification is present, based on the individual area estimation information.

10. An image processing method executed by an image processing apparatus (5) communicable with an image capturing apparatus (3), the method comprising:
acquiring (S100) an image of an imaging range of the image capturing apparatus (3), captured by the image capturing apparatus (3);
recognizing (S101) an identification that identifies an individual target object included in the image;
calculating (S102) a trajectory of positions between which the target object included in the image moves;
estimating (S105) an area in which the target object is present based on the trajectory; and
obtaining (S106) individual area estimation information associating the estimated area corresponding to acquired trajectory and the identification of the target object, the acquired trajectory having been acquired based on the positions at which the identification of the target object is recognized.

11. A carrier medium carrying computer readable code for controlling a computer system to carry out a method, the method comprising:
acquiring (S100) an image of an imaging range of the image capturing apparatus (3), captured by the image capturing apparatus (3);
recognizing (S101) an identification that identifies an individual target object included in the image;
calculating (S102) a trajectory of positions between which the target object included in the image moves;
estimating (S105) an area in which the target object is present based on the trajectory; and
obtaining (S106) individual area estimation information associating the estimated area corresponding to acquired trajectory and the identification of the target object, the acquired trajectory having been acquired based on the positions at which the identification of the target object is recognized.
